# EUROPÄISCHE PATENTSCHRIFT

(11) **EP 4 122 850 B1**
(45) Veröffentlichungstag und Bekanntmachung des Hinweises auf die Patenterteilung: **10.09.2025**
(21) Anmeldenummer: 22185370.8
(22) Anmeldetag: 18.07.2022
(51) Int. Cl.: B65G 53/24, B65G 53/66

(54) **SAUGFÖRDER-VORRICHTUNG UND VERFAHREN ZUM SAUGFÖRDERN VON SCHÜTTGUT**
SUCTION CONVEYOR DEVICE AND METHOD FOR SUCTION CONVEYING BULK MATERIAL
DISPOSITIF DE TRANSPORT PAR ASPIRATION ET PROCÉDÉ DE TRANSPORT PAR ASPIRATION DES PRODUITS EN VRAC

(30) Priorität: 19.07.2021 DE 102021118548
(43) Veröffentlichungstag der Anmeldung: 25.01.2023
(73) Patentinhaber: CiTEX Holding GmbH, 49324 Melle (DE)
(72) Erfinder: Böhm, Roland, 48341 Altenberge (DE); Klose, Ralph, 49324 Melle (DE)
(74) Vertreter: Bremer, Ulrich

(56) Entgegenhaltungen:
- EP-A1- 2 808 278
- EP-A1- 2 889 239
- EP-A1- 3 285 132
- DE-A1- 102013 004 634
- DE-A1- 3 934 910
- DE-B3- 102006 011 742
- DE-C- 853 877

## Beschreibung

Zur Beförderung von rieselfähigen Schüttgütern sind Saugförder-Vorrichtungen bekannt, die einen materialschonenden Transport über längere Strecken ermöglichen. Insbesondere bei der Verarbeitung von Kunststoffen werden ein oder mehrere Kunststoffe als rieselfähiges Rohmaterial von Silos oder anderen Vorratsbehältern durch pneumatischen Saugförderung zu Produktionsmaschinen, z.B. einem Extruder, befördert. Das rieselfähige Schüttgut kann z. B. als Granulat, Pulver, Körner, Pellets, Flocken und dergleichen vorliegen.

Das Vakuum bzw. der Unterdruck wird von einer Pumpeneinheit erzeugt und zu einem z.B. an der Produktionsmaschine vorgesehenen Förderabscheider geführt, der das in einer Ansaugleitung transportierte Schüttgut aus dem Luftstrom abscheidet. Der Förderabscheider besitzt im Allgemeinen zwei Öffnungen, wobei an einer Eingangsöffnung mittels eines Schlauchs oder Rohrs der Anschluss an die Pumpeneinheit erfolgt und an die andere Öffnung z. B. eine Schlauchverbindung angesetzt wird, die direkt zu dem Vorratsbehälter des Schüttguts geführt wird, wobei Ansaugstrecken von mehreren hundert Metern zurückgelegt werden können.

Die Rohrleitungen zwischen der zentralen Pumpeinheit und dem Förderabscheider können unterschiedlich ausgebildet sein, z. B. als Rohrleitung mit Rohren und Schlauchelementen, die gerade oder als Bogen ausgeführt sind. Weiterhin können Absperrventile und andere Armaturen in der Ansaugleitung vorhanden sein. Durch die jeweilige Pumpeneinheit wird somit ein Unterdruck bzw. Vakuum erzeugt, das über den Förderabscheider zu der Schlauchleitung und dem Vorratsbehälter geführt wird. Die Vorratsbehälter können als stationäre Silos oder auch z. B. mobile Materialbehältnisse vorliegen, mit unterschiedlichen Anschlüssen für die Saugleitungen. In den Förderabscheidern wird das abgeschiedene Material gesammelt und nachfolgend einem Material- Aufnahmebehälter der jeweiligen Produktionsmaschine zugeführt.

Eine zu geringe Saugleistung der Ansaugleitung kann dazu führen, dass das Schüttgut nicht hinreichend in dem Luftstrom aufgenommen wird und somit kein kontinuierlicher Materialtransport gewährleistet ist. Bei zu hohen Saugleistungen kann jedoch das Schüttgut wiederum beschädigt werden, indem es zu sehr erhitzt wird und teilweise aufschmelzen kann. Die Materialaufschmelzungen können z. B. durch Friktion an den Wandungen der Ansaugleitungen, insbesondere auch an Umlenkungen, Bögen, Ventilen usw. auftreten. Die Kunststoffaufschmelzungen können im Ansaugtrakt agglomerieren und diesen verstopfen oder nachfolgende Maschinen stören, wobei z. B. auch Ventile verklebt und behindert werden können.

So liegen im Allgemeinen unterschiedliche Ansaugrandbedingungen vor, z. B. unterschiedliche zu überwindende Höhen, Leitungslängen und Querschnitte, bei unterschiedlichen Umgebungstemperaturen und Materialtemperaturen, sowie unterschiedliches Fördergut, das sich in Materialzusammensetzung, Ausbildung der Körner oder Granulate und seinen thermischen und mechanischen Eigenschaften unterscheiden kann.

Wenn mehrere, d.h. mindestens zwei Schüttgüter transportiert werden sollen, ist grundsätzlich der Anschluss unterschiedlicher Pumpeneinheiten an die jeweiligen Ansaugleitungen möglich. Durch mehrere Pumpeneinheiten entstehen jedoch zusätzliche Kosten, außerdem wird z. B. der Anschluss weiterer Ansaugleitungen hierdurch begrenzt. Bei dem Anschluss an eine zentrale Pumpeneinheit wird jedoch im Allgemeinen ein einheitlicher Ansaug-Druck bzw. ein Förder-Vakuum erzeugt, das nicht für jede Ansaugleitung geeignet ist.

Wenn somit nicht nur eine Komponente anzusaugen ist, sondern mehrere Rohstoffe z. B. einer Verarbeitungsmaschine als Materialmischung zugeführt werden, sind somit unterschiedliche Schüttgüter über unterschiedliche Förderwege zu transportieren. So können z. B. vier unterschiedliche Schüttgüter bzw. Materialien mit unterschiedlichen Materialeigenschaften und Temperaturen aus unterschiedlichen Lagerorten mit unterschiedlichen Förderlängen und Schlauchdurchmessern anzusaugen sein. Das hierfür erforderliche Vakuum einer zentralen Pumpeneinheit muss somit hoch genug sein, um das Material anzusaugen, ohne jedoch wiederum zu einer Beschädigung zu führen. Hierzu wird im Allgemeinen die Förderung in unterschiedlichen Zyklen bzw. Schritten vorgenommen, in denen jeweils einige oder mehrere der Schüttgüter befördert werden, bevor auf einen anderen Zyklus umgeschaltet wird.

Grundsätzlich sind weiterhin Pumpeneinheiten mit einstellbaren Vakuum-Leistungen bekannt. Wenn hierbei sukzessive Absperrventile unterschiedlicher Ansaugleitungen angeschlossen werden, verteilt sich der eingestellte Unterdruck entsprechend nach den Regeln der Strömungsdynamik auf eine veränderte Anzahl von Anschlüssen und somit auch Leitungsquerschnitten, sodass bei Anschluss einer zusätzlichen Ansaugleitung z. B. ein Druckabfall und ein Absenken der Förderleistung an den angeschlossenen Anschlussleitungen erfolgen kann, der zu einem Abriss der Förderleistung führt. Eine Erhöhung oder eine Absenkung der Förderleistung wird jedoch im Allgemeinen nicht für jede Ansaugleistung die erforderlichen Mindest- und Maximalwerte erfüllen.

Die DE 10 2013 004 634 A1 beschreibt eine pneumatische Förderanlage, die insbesondere als Schnitttabakförderanlage ausgebildet ist und zum Fördern eines Fördergutes in einem Gasstrom dient. Sie weist eine Mehrzahl von Förderleitungen, die mit Fördergut mit einem Gasstrom befüllt sind, und wenigstens eine Trenneinrichtung für jede der Förderleitungen auf. Die Trennvorrichtung ist in jede der Förderleitungen integriert und so ausgelegt, dass das Fördergut abgetrennt wird und ein von dem Fördergut im Wesentlichen separierter Restgasstrom in der Förderleitung weitergeleitet wird.

Die DE 10 2006 011 742 B3 beschreibt ein Verfahren und eine Vorrichtung zur Regelung der Fördermenge von pneumatisch transportiertem Leichtgut, insbesondere Schnitttabak oder Tee, in einer Saugförderanlage zur Zufuhr des Leichtguts zu einer Weiterverarbeitungsvorrichtung, insbesondere Zigarettenherstellungsmaschine. Hierbei sind ein Beschickungsrohr, ein daran anschließender Separator zur Trennung des Leichtguts von einem pneumatischen Fördermedium und ein an dem Separator angeschlossenes Saugrohr vorgesehen, wobei im Saugrohr eine einstellbare Regelklappe zur Steuerung des pneumatischen Fördermediums angeordnet ist, und ein Sensor mit der Regeleinheit verbunden ist.

Aus der DE 39 34 910 A1 ist eine Saugförderanlage zum gravimetrischen Zuteilen von Schüttgutkomponenten, insbesondere schüttfähiger Materialkomponenten zu einer Mehrzahl von Bedarfsstellen mit hier eine Komponente enthaltenden Vorratsbehältern. Die Vorratsbehälter sind über je eine Förderleitung mit einem Verteiler verbunden. Weiterhin ist an jeder Bedarfsstelle ein Abscheider vorgesehen, der über eine Förderleitung mit dem Verteiler verbunden ist. Weiterhin ist eine Saugleitung mit Absperrventil mit einem Sauggebläse vorgesehen.

Die DE 42 19 616 A1 beschreibt ein Verfahren zur pneumatischen Förderung von Schüttgut, bei den körniges bzw. pulverförmiges Schüttgut über ein Einspeisorgan und eine Förderleitung in wenigstens ein Sammelgefäß transportiert wird, was aufgrund eines in Förderrichtung anliegenden Unterdrucks mittels einer Gasströmung erfolgt.

Die 44 31 063 A1 beschreibt eine mobile Untertage-Saugförderanlage zum Aufnehmen, Fördern, Abscheiden und Entsorgen von staubförmigen und auch feuchten sowie klebrigen Ablagerungen des untertägigen Bergbaus, wobei die Saugförderanlage über eine Saugdüse verfügt, der neben den Ansaugöffnungen auch Benetzungsbohrungen hinzugeordnet sind.

Die DE 853 877 C offenbart eine pneumatische Saugförder-Vorrichtung nach dem Oberbegriff des Anspruchs 1 und ein Verfahren zum Saugfördern von Schüttgut nach dem Oberbegriff des Anspruchs 12. Das genannte Dokument beschreibt eine Vorrichtung zum selbsttätigen Regeln der Förderleistung bei pneumatischen Förderanlagen, insbesondere zum Einhalten einer gleichmäßigen Förderleistung in mehreren, an eine gemeinsame Saugrohrleitung angeschlossenen Zweigrohrleitungen. Hierbei ist in der Fördermittel-Leitung zwischen Filter bzw. Abscheider und Gebläse ein Messgerät für die Luftgeschwindigkeit vorgesehen, das eine auf den statischen Druck des Fördermittels ansprechende Vorrichtung schaltet, die wiederum ein Regelglied steuert.

EP 2 889 239 A1 zeigt ein Verfahren zum pneumatischen Unterdruck-Transport von Bulk-Materialien mit hoher Massenkonzentration, wobei das Bulk-Material von einer Anfangszone mit atmosphärischem Druck durch eine Rohrleitung in eine Aufnahmezone transportiert wird, und die Aufnahmezone mit Unterdruck ausgebildet ist. Hierzu wird eine Vakuumpumpe eingesetzt, die über Ventile an Aufnahmeeinrichtungen angeschlossen ist.

DE 39 34 910 A1 beschreibt eine pneumatische Saugförderanlage zum gravimetrischen Zuteilen verschiedener schüttfähiger Materialkomponenten zu einer Mehrzahl von Bedarfsstellen mit je eine Komponente enthaltenen Vorratsbehältern und einem Abscheider an jeder Bedarfsstelle, der über eine Förderleitung mit dem Verteiler, eine Saugleitung mit Absperrventil mit einem Sauggebläse verbunden und über eine verschließbare Austragsöffnung an der Bedarfsstelle entleerbar ist.

DE 10 2013 004 634 A1 beschreibt eine pneumatische Förderanlage zum Fördern eines Fördergutes, insbesonde Schnitttabak, in einem Gasstrom, aufweisend eine Mehrzahl mit Fördergut im Gasstrom beschickter Förderleitungen und wenigstens einer Trennvorrichtung für jede der Förderleitungen.

EP 3 285 132 A1 beschreibt ein Verfahren und eine Ausgangsvorrichtung zum Ausgeben von Pulver und/oder Granular-Material, bei dem das Material simultan von wenigstens zwei Ausgabebehältern in einem Transferapparat ausgegeben wird.

Der Erfindung liegt die Aufgabe zugrunde, eine Saugförder-Vorrichtung und ein Verfahren zur Saugförderung von Schüttgütern zu schaffen, die eine sichere Einstellung der Förderung mehrerer, d.h. mindestens zweier Schüttgüter ermöglichen.

Diese Aufgabe wird durch eine Saugförder-Vorrichtung und ein Verfahren nach den unabhängigen Ansprüchen gelöst. Die Unteransprüche beschreiben bevorzugte Weiterbildungen.

Somit sind in den einzelnen Ansaugleitungen jeweils zum einen Sperrventile zum Absperren der jeweiligen Ansaugleitung, und weiterhin Regelkreise zur Einstellung einer Ansauggeschwindigkeit und/oder Ansaugleistung vorgesehen. Die Regelkreise weisen jeweils einen Durchfluss-Sensor und ein einstellbares Drosselventil auf, die eine Regelung der Ansauggeschwindigkeit ermöglichen. Die Regelkreise sind vorteilhafterweise zwischen dem Förderabscheider und dem zentralen Ansaugvolumen der Pumpeneinheit vorgesehen und messen somit die Ansauggeschwindigkeit ohne das geförderte Material der Schüttgüter.

Durch diesen relativ geringen zusätzlichen Hardware-Aufwand ist eine individuelle Einstellung der einzelnen Ansaugleitungen möglich.

Hierbei ist zunächst eine individuelle, z. B. auch händische Einstellung der einzelnen Regelkreise möglich, um die Förderleistung bzw. Ansauggeschwindigkeit individuell einzustellen.

Gemäß einer bevorzugten Ausbildung können Sollwertvorgaben der einzelnen Regelkreise von einer zentralen Steuereinheit zugeführt werden, die die relativen Einstellwerte der angeschlossenen Ansaugleitungen berücksichtigt und somit ein Mischungsverhältnis der einzusetzenden Schüttgüter einstellt. Somit kann z. B. in Abhängigkeit einer aufgenommenen Rezeptur das Verhältnis der Förderleistungen und/oder Ansauggeschwindigkeiten eingestellt werden, um eine kontinuierliche geeignete Förderung zu erreichen. Somit kann auch z. B. bei Vorliegen einer geänderten Rezeptur und Anschließen oder Abtrennen einer Ansaugleitung direkt eine Regelung der geänderten Ansauggeschwindigkeiten der weiteren Ansaugleitungen erreicht werden, da ein Druckabfall oder eine Druckerhöhung bei Änderung der Anzahl der angeschlossenen Ansaugleitungen direkt zu einer Kompensation durch die Regelung führt.

Jeder geschlossene Regelkreis führt vorzugsweise zunächst eine geschlossene Regelung durch, um die jeweilige Ansauggeschwindigkeit zwischen einem unteren Grenzwert und einem oberen Grenzwert einzuregeln. Durch den unteren Grenzwert wird eine kontinuierliche Förderung sichergestellt, bei der ein Abreißen des Förderstroms verhindert wird. Durch den oberen Grenzwert wird eine zu hohe Ansauggeschwindigkeit verhindert, die zu einer Aufwärmung und Beschädigung des Schüttguts und z. B. Verunreinigungen durch Verkleben des Schüttgutes führen kann. Von einer zentralen Steuereinheit kann dabei die Vorgabe der Sollwerte erfolgen, insbesondere zur Einstellung einer Rezeptur als Verhältnis der Mengen und/oder Ansauggeschwindigkeiten.

Erfindungsgemäß kann insbesondere eine kaskadierte Ansteuerung der geschlossenen Regelkreise und der übergeordneten zentralen Steuereinheit ausgebildet werden, bei der die geschlossenen Regelkreise die inneren Regelungen darstellen, die direkt und/oder schnell auf geänderte Werte der Ansauggeschwindigkeiten reagieren und somit die Ansauggeschwindigkeiten derartig ändern, dass diese zwischen den Grenzwerten liegen. Somit kann sowohl ein Abriss der Förderung als auch eine Materialbeschädigung sicher vermieden werden. Die übergeordnete bzw. überlagerte Steuerung und/oder Regelung durch die Steuereinheit gibt die Sollwerte vor, auf die die geschlossenen Regelkreise mit z.B. einer größeren Zeitkonstante einregeln. Die geschlossenen Regelkreise können hierbei die erreichten Ansauggeschwindigkeiten an die zentrale Steuereinheit zurückmelden, so dass die zentrale Steuereinheit eine überlagerte Regelung durch Anpassung der einzelnen Sollwerte vornehmen kann. Somit können z.B. Verzögerungen in einer Ansaugleitung durch die zentrale Steuereinheit durch Änderung sämtlicher Sollwerte kompensiert werden, um das Mischungsverhältnis sicherzustellen.

Die Erfindung kann zum einen bei einer Pumpeneinheit mit einer Vakuumpumpe ohne zusätzliche Regelung eingesetzt werden. Weiterhin kann auch eine Regelung oder Einstellbargeit der Pumpenleistung vorgesehen sein, da eine geschlossene Regelung der einzelnen Ansaugleitungen unabhängig von der jeweiligen Motorleistung möglich ist. So kann z.B. ein Druck im zentralen Ansaugvolumen zum einen durch eine Bypass-Leitung bzw. Frischluft-Leitung gedrosselt werden, und alternativ oder ergänzend eine geschlossene Regelung der Förderleistung vorgenommen werden

Gemäß einer ersten Alternative der Erfindung ist der Durchfluss-Sensor in den geschlossenen Regelkreisen als Terahertz-Sensor (THz-Sensor) ausgebildet, da derartige THz-Sensoren die Ansauggeschwindigkeit v ohne eine Beeinflussung des Luftstroms und effektiv, sicher und mit geringem Aufwand und Platzbedarf messen können. Die THz-Strahlung kann insbesondere im Frequenzbereich von 10 GHZ bis 50 THz, insbesondere 10 GHZ bis 10 THZ, insbesondere 20 GHz bis 3 THZ vorzugsweise 50GHz bis 1 THz liegen. Somit kann die THz-Strahlung sich auch in den Bereich der Radarstrahlung und/oder Mikrowellenstrahlung erstrecken. Die THz-Strahlung kann insbesondere als direkte Laufzeitmessung und/oder mittels Frequenzmodulation und/oder als gepulste Strahlung ausgesandt und detektiert werden.

Gemäß der zweiten Alternative der Erfindung ist der Durchfluss-Sensor als Ultraschallsensor ausgelegt, der eine sichere Messung der Luftgeschwindigkeit ermöglicht. Derartige THz-Sensoren und Ultraschallsensoren erfassen die Ansauggeschwindigkeit erfindungsgemäß durch ein Laufzeitdifferenzverfahren und/oder durch Dopplermessung; da der Regelkreis oberhalb des Förderabscheiders vorgesehen ist, wird direkt der Luftstrom, insbesondere ohne Material-Komponenten, mit hoher Genauigkeit detektiert.

Entsprechend wird durch das erfindungsgemäße Verfahren zur Förderung von Schüttgütern eine sichere und materialschonende Förderung ermöglicht, die auch bei plötzlich auftretenden Änderungen durch Anschließen und Trennen von Ansaugleitungen und anderen Maßnahmen, wie z. B. einem vorübergehenden Verklumpen des Materials beim Fördern in einer Ansaugleitung, zu einer schnellen und flexiblen Anpassung der einzelnen Ansaugleitungen führt, wobei vorzugsweise eine Einstellung der Mengenverhältnisse erfolgt.

Es können mehrere, d.h. mindestens zwei, Ansaugleitungen an das Ansaugvolumen angeschlossen sein. Somit können z.B. zwei Ansaugleitungen, oder auch drei oder vier Ansaugleitungen angeschlossen sein.

Die Erfindung wird im Folgenden anhand der beiliegenden Zeichnungen an einer Ausführungsform näher erläutert. Es zeigen:
- Fig. 1: eine pneumatische Saugförder-Vorrichtung gemäß einer Ausführungsform der Erfindung;
- Fig. 2: eine detailliertere Ansicht einer Ansaugleitung;
- Fig. 3: ein Diagramm der einzelnen Fördergeschwindigkeiten der mehreren Ansaugleitungen, wenn sämtliche Sperrventile und Regelventile geöffnet sind;
- Fig. 4: ein Diagramm der Fördergeschwindigkeiten bei nur zwei geöffneten Sperrventilen, unter Darstellung der Regelung der Fördergeschwindigkeit.

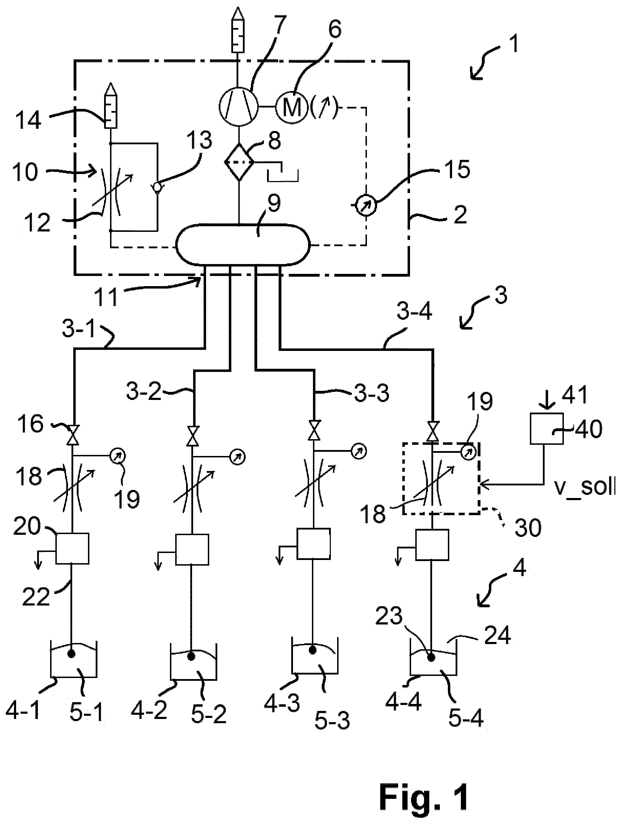

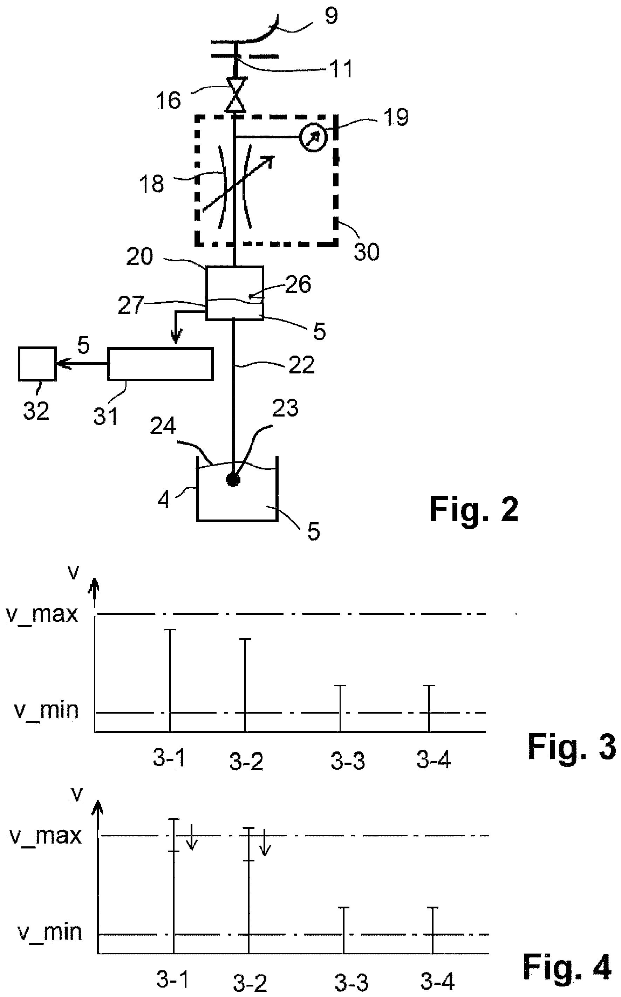

Eine Fördervorrichtung 1 weist gemäß Figur 1 eine Pumpeneinheit 2 und vier an die Pumpeneinheit 2 angeschlossene Ansaugleitungen 3 auf, die in Fig. 1 als 3-1, 3-2, 3-3 und 3-4 bezeichnet sind, wobei an jeder Ansaugleitung 3 jeweils ein Vorratsbehälter 4 mit einem Schüttgut 5 angeschlossen ist. Somit sind an die Ansaugleitungen 3-1, 3-2, 3-3 und 3-4 die Vorratsbehälter 4-1, 4-2, 4-3, 4-4 angeschlossen, in denen z. B. vier verschiedene Schüttgüter 5-1, 5-2, 5-3 und 5-4 aufgenommen sind. Fig. 2 zeigt eine der Ansaugleitungen 3 detaillierter. Die Schüttgüter 5 stellen rieselfähige Ausgangsstoffe, z. B. als Pulver, Granulat, Pellets, Flocken oder ähnliche Materialien unterschiedlicher Größe und Form, sowie unterschiedlicher Stoffzusammensetzungen dar. Die Ausgangsstoffe 5 können verschiedene Kunststoffe, Additive, Gummipartikel, Recycling-Materialien, oder z. B. auch Lebensmittel wie Körner, Mehl, usw. sein.

In der Pumpeneinheit 2 erzeugt eine Vakuumpumpe 7 ein Vakuum bzw. einen Unterdruck p9, der über die mehreren Ansaugleitungen 3 zu den Vorratsbehältern 4 geführt wird. Die rieselfähigen Schüttgüter 5 werden über die Ansaugleitungen 3 in einem Luftstrom angesaugt, d. h. die Ansaugleitungen 3 fördern die in Luft aufgeschwemmten Schüttgüter 5. Die Vakuumpumpe 7 wird von einem Motor 6 angetrieben und ist über einen Filter 8 an ein zentrales Ansaugvolumen 9 angeschlossen, an das wiederum vordere Ansaug-Anschlüsse 11 der Ansaugleitungen 3 angeschlossen sind.

Gemäß einer Ausführungsform kann an das zentrale Ansaugvolumen 9 weiterhin eine Bypass-Luftleitung (Falschluft-Leitung) 10 angeschlossen sein, die eine einstellbare Drossel 12, ein der Sicherheit dienendes Rückschlagventil 13 und einen Ausgangs-Luftanschluss 14 aufweist, so dass eine Falschluft-Zuführung bzw. Bypass-Luftzuführung zu dem zentralen Ansaugvolumen 9 möglich ist, um den im zentralen Ausgangsvolumen 9 gebildeten Unterdruck p9 zu verringern bzw. einstellen zu können.

Gemäß einer weiteren vorteilhaften Ausbildung kann der Motor 6 regelbar sein, z. B. als frequenzgeregelter Elektronantrieb, zur Veränderung der Förderleistung der Vakuumpumpe 7, wodurch insbesondere gegenüber der Zuführung von Falschluft Energie eingespart und die Belastung verringert werden kann. Hierzu ist an das zentrale Ausgangsvolumen 9 ein Drucksensor 15 angeschlossen, so dass der durch den Drucksensor 15 gemessene Unterdrucks p9 in dem zentralen Ansaugvolumen 9 geregelt wird.

Jede Ansaugleitung 3 weist ein an den vorderen Ansauganschluss 11 angeschlossenes Sperrventil 16, ein einstellbares Drosselventil 18 und einen Förderabscheider 20 auf, der über eine Schlauchverbindung 22 mit dem jeweiligen Vorratsbehälter 4 verbunden ist, so dass das hintere Ende 23 der Schlauchverbindung 22 in das jeweilige Schüttgut 5 geführt wird und das Schüttgut 5 ansaugt.

Durch die Sperrventile 16 kann jede der Ansaugleitungen 3 separat angeschlossen bzw. getrennt werden. Somit können gemäß der hier gezeigten Ausführungsform bis zu vier verschiedene Schüttgüter 5-1 bis 5-4 über die Vorratsbehälter 4-1 bis 4-4 aufgenommen und gefördert werden. Die Vorratsbehälter 4 können stationäre Silos mit einem Ausströmventil 24, oder auch z. B. mobile Materialbehältnisse sein, die z. B. ohne spezielle Auslauföffnung eine direkte Zuführung einer Sauglanze in das jeweilige Schüttgut 5 ermöglichen.

In den Förderabscheidern 20 wird das in der Luft aufgeschwemmte bzw. mitgenommene Schüttgut 5 abgeschieden, so dass es nachfolgend entnommen und z. B. über eine Förderschnecke weitertransportiert werden kann. Hierzu sind in dem Förderabscheider 20 vorzugsweise Höhenstandsmesser 26 vorgesehen, die in Abhängigkeit einer ermittelten Füllhöhe eine Entnahmeeinrichtung, z. B. eine Ausgangsklappe 27, für das jeweilige Schüttgut 5 öffnet, so dass das Schüttgut 5 an einen Materialbehälter 31 ausgegeben wird, der dieses z.B. über eine Förderschnecke an eine Verarbeitungsmaschine 32, z.B. einen Extruder, weiterfördert.

Zwischen dem jeweiligen Sperrventil 16 und dem Förderabscheider 20 wird durch das einstellbare Drosselventil 18 sowie den Durchfluss-Sensor 19 ein Regelkreis 30 gebildet, der zur Regelung der Ansauggeschwindigkeit v in der Ansaugleitung 3 dient. Da der Regelkreis 30 oberhalb des Förderabscheiders 20 vorgesehen ist, kann direkt die Ansauggeschwindigkeit v der Luft, insbesondere ohne Material-Komponenten detektiert werden. Der Sensor 19 kann die Ansauggeschwindigkeit v nach unterschiedlichen physikalischen Messprinzipien detektieren. Erfindungsgemäß kann der Sensor 19 als THz-Sensor, aber auch als Ultraschallsensor ausgelegt sein, und die Ansauggeschwindigkeit v durch ein Laufzeitdifferenzverfahren und/oder durch Dopplermessung erfassen. In Abhängigkeit der gemessenen Ansauggeschwindigkeit v wird dann das Drosselventil 18 eingestellt, das hierzu mit einem Aktor, insbesondere zur Querschnitts-Veränderung, ausgebildet ist.

Den einzelnen Regelkreisen 30 der Ansaugleitungen 3-1, 3-2, 3-3, 3-4 werden verschiedene Sollwerte v_soll für die Ansauggeschwindigkeiten v1, v2, v3, v4 vorgegeben. Diese Einstellung kann individuell, z. B. durch eine Einstelleinrichtung wie einen Potentiometer an den Regelkreisen 30, oder auch über eine zentrale Steuereinrichtung 40 erfolgen, die die einzelnen Regelkreise 30 ansteuert. In der zentralen Steuereinrichtung 40 kann eine vom Benutzer einzugebende Rezeptur 41 gespeichert sein, die zum einen angibt, welche Sperrventile 16 geöffnet bzw. geschlossen sein sollen, und die weiterhin die individuellen Sollwerte v_soll vorgibt. Somit kann ein komplexeres Materialhandling durch die Rezeptur, d. h. als Liste oder Tabelle, das Verhältnis der Schüttgüter 5 festlegen.

Somit kann durch die Fördervorrichtung 1 eine einstellbare Anzahl von Ansaugleitungen 3, mit unterschiedlichen Schüttgütern 5 und unterschiedlichen Rezepturen, d. h. Verhältnissen der geförderten Schüttgüter 5, eingestellt werden. Die Regelkreise 30 und die zentrale Vorgabe der Rezeptur 41 ermöglichen Regelungen der Mischverhältnisse unabhängig von apparativen Verhältnissen wie Leitungsquerschnitten der Ansaugleitungen 3, insbesondere der Schlauchverbindungen 22 und Ventilen.

Vorzugsweise werden die Ansauggeschwindigkeiten v jeweils zwischen einem oberen Grenzwert v-max und einem unteren Grenzwert v-min geregelt. Bei Überschreiten des oberen Grenzwertes v-max kann das jeweilige Schüttgut 5 durch Reibung Schaden nehmen und sich z. B. erhitzen, so dass es teilweise aufschmilzt und die Leitungen verstopfen kann. Bei Unterschreiten des unteren Grenzwertes v-min kann gegebenenfalls kein sicherer Förderbetrieb mehr gewährleistet werden, da die Materialaufnahme abreißen kann.

Das Diagramm der Figur 3 zeigt einen Prozess, bei dem sämtliche vier Ansaugleitungen 3-1, 3-2, 3-3 und 3-4 über ihre jeweiligen Sperrventile 16 angeschlossen sind. Somit wird der in dem zentralen Ansaugvolumen 9 ausgebildete Unterdruck p9 auf die vier Ansaugleitungen 3-i, i= 1, 2, 3, 4, verteilt. Durch Einstellung der einzelnen Regelkreise 30-i kann somit der jeweilige Wert der Ansauggeschwindigkeit v-1, v-2, v-3, v-4 jeweils n dem zulässigen Bereich zwischen v-max und v-min geregelt werden.

Wenn z. B. von Figur 3 ausgehend bei den geöffneten Sperrventilen 16-i sowie entsprechend eingestellten Drosselventilen 18-i, mit i= 1, 2, 3,4, jeweils eine Fördergeschwindigkeit v im zulässigen Regelbereich vorliegt, so kann z.B. nachfolgend gemäß Fig. 4 die Rezeptur 41 dahingehend geändert werden, dass die Schüttgüter 5-3, 5-4 nicht mehr aufgenommen werden. Somit werden gemäß Figur 4 die Absperrventile 16-3, 16-4 der beiden Ansaugleitungen 3-3, 3-4 geschlossen, so dass der vom zentralen Ansaugvolumen 9 bereitgestellte Druck p9 als Unterdruck nur auf die beiden Ansaugleitungen 3-1, 3-2 verteilt wird und somit in diesen beiden Ansaugleitungen 3-1, 3-2 einen höheren Unterdruck bzw. niedrigeren Druckwert bereitstellt.

Entsprechend wird zunächst in den Ansaugleitungen 3-1, 3-2 eine zu hohe Ansauggeschwindigkeit v1, v2 erreicht und gemessen, die oberhalb des oberen Grenzwertes v-max liegt. Somit werden die Fördergeschwindigkeit v1, v2 nachfolgend in den Regelkreisen 30 durch Regelung über das jeweilige Drosselventil 18-1 und 18-2 abgesenkt, so dass die Fördergeschwindigkeit v1, v2 umgehend in den zulässigen Bereich unterhalb von v-max gelangt. Dieser Regelung ist dann die Einstellung der relativen Mischungsverhältnisse entsprechend der Rezeptur überlagert.

### Bezugszeichenliste

- 1: Fördervorrichtung
- 2: Pumpeneinheit
- 3: Ansaugleitungen
- 3-i, i = 1, 2, 3, 4: einzelne Ansaugleitungen
- 4: Vorratsbehälter
- 4-i, i = 1, 2, 3, 4: einzelne Vorratsbehälter
- 5: Schüttgut
- 5-i, i = 1, 2, 3, 4: einzelne Schüttgüter
- 6: Motor
- 7: Vakuumpumpe
- 8: Filter
- 9: zentrales Ansaugvolumen
- 10: Bypass-Leitung, Falschluft-Leitung
- 11: vorderer Ansaug-Anschluss
- 12: Drossel, einstellbar, der Bypass-Leitung 10
- 13: Rückschlagventil
- 14: Ausgangs-Luftanschluss
- 15: Drucksensor zur Messung des Ansaugdruckes p9
- 16: Sperrventil
- 18: einstellbares Drosselventil
- 19: Durchfluss-Sensor zur Messung der Ansauggeschwindigkeit v
- 20: Förderabscheider
- 22: Schlauchverbindung
- 23: hinteres Ende der Ansaugleitung 3
- 24: Ausströmventil in dem Vorratsbehälter 4
- 26: Höhenstands-Sensor
- 27: Ausgangs-Klappe in dem Vorratsbehälter 4
- 30: geschlossene Regelkreise
- 31: Materialbehälter an dem Förderabscheider
- 32: Verarbeitungsmaschine, z.B. Extruder
- 40: zentrale Steuereinrichtung
- 41: Rezeptur, Verhältnis der Fördermengen

- p9: Druck im zentralen Ansaugvolumen 9
- v: Ansauggeschwindigkeit
- v1, v2, v3, v4: einzelne Ansauggeschwindigkeiten
- v_soll: Sollwert
- v-max: oberer Grenzwert
- v-min: unterer Grenzwert

## Patentansprüche

1. Pneumatische Saugförder-Vorrichtung (1) zum Fördern von rieselfähigen Schüttgütern (5; 5-1, 5-2, 5-3, 5-4), wobei die Saugförder-Vorrichtung (1) aufweist:
eine Pumpeneinheit (2) mit einer Vakuumpumpe (7) und einem Ansaugvolumen (9),
mindestens zwei Ansaugleitungen (3; 3-1, 3-2, 3-3, 3-4), die an das Ansaugvolumen (9) angeschlossen sind und sich zu Vorratsbehältern (4; 4-1, 4-2, 4-3, 4-4) zur Aufnahme von Schüttgut erstrecken,
wobei die Ansaugleitungen (3) jeweils eine zu den jeweiligen Vorratsbehältern (4) führende hintere Leitung (22) und einen an die hintere Leitung (22) angeschlossenen Förderabscheider (20) zum Abscheiden des Schüttguts (5) aufweisen,
wobei
in der Ansaugleitung (3) jeweils ein geschlossener Regelkreis (30) mit einem in der Ansaugleitung (3) vorgesehen einstellbaren Drosselventil (18) und einem Durchfluss-Sensor (19) zur Messung einer Ansauggeschwindigkeit (v) in der Ansaugleitung (3) vorgesehen ist,
wobei der Regelkreis (30) eingerichtet und ausgebildet ist, das Drosselventil (18) in Abhängigkeit der gemessenen Ansauggeschwindigkeit (v) einzustellen,
wobei die Regelkreise (30) derartig ausgebildet sind, die Ansauggeschwindigkeit (v) jeweils auf einen einstellbaren Sollwert (v_soll) zu regeln, **dadurch gekennzeichnet, dass**
in jeder Ansaugleitung (3) jeweils ein Sperrventil (16) zum Sperren der Ansaugleitung (3) vorgesehen ist und der Förderabscheider (20) jeweils zum einen über das Sperrventil (16) an die Pumpeneinheit (20) und zum anderen an die hintere Leitung (22) angeschlossen ist, und
der Durchfluss-Sensor (19) als THz-Sensor oder Ultraschall-Sensor ausgebildet ist zur Messung der Ansauggeschwindigkeit (v) in der Ansaugleitung (3), und
der Durchfluss-Sensor (19) ausgebildet ist zur Messung der Ansauggeschwindigkeit (v) als Doppler-Messung und/oder Laufzeitmessung und/oder Laufzeitdifferenzverfahren.

2. Saugförder-Vorrichtung (1) nach Anspruch 1, **dadurch gekennzeichnet, dass** der Regelkreis (30) in der Ansaugleitung (3; 3-1, 3-2, 3-3, 3-4) jeweils zwischen dem Förderabscheider (20) und dem Sperrventil (16) vorgesehen ist.

3. Saugförder-Vorrichtung (1) nach einem der vorherigen Ansprüche, **dadurch gekennzeichnet, dass** die Sollwerte (v_soll) der mindestens zwei Ansaugleitungen (3; 3-1, 3-2, 3-3, 3-4) unabhängig voneinander einstellbar sind.

4. Saugförder-Vorrichtung (1) nach Anspruch 3, **dadurch gekennzeichnet, dass** eine zentrale Steuereinrichtung (40) vorgesehen ist, die die Regelkreise (30) der mehreren Ansaugleitungen (3-1, 3-2, 3-3, 3-4) mit individuellen Sollwerten (v_soll) ansteuert, zur Einstellung von relativen Verhältnissen der mindestens zwei Ansauggeschwindigkeiten (v) zueinander in Abhängigkeit einer Rezeptur (41),
wobei die zentrale Steuereinrichtung (40) eine Schnittstelle zur Aufnahme der Rezeptur (41) aufweist.

5. Saugförder-Vorrichtung (1) nach Anspruch 4, **dadurch gekennzeichnet, dass** in der zentralen Steuereinrichtung (40) und / oder in den dezentralen Regelkreisen (30) gespeichert ist
- ein oberer Grenzwert (v-max) der jeweiligen Ansauggeschwindigkeit (v), zur Vermeidung von Beschädigungen und / oder Erwärmungen des Schüttguts (4) und
- ein unterer Grenzwert (v-min) der jeweiligen Ansauggeschwindigkeit (v), zur Sicherstellung eines Ansaugvorgangs durch die hinteren Leitungen (22),
wobei die Regelkreise (30) vorgesehen und eingerichtet sind, die durch den Durchfluss-Sensor (19) gemessene Ansauggeschwindigkeit (v) innerhalb der Grenzwerte (v-min, v-max) zu regeln, insbesondere als innere Regelung.

6. Saugförder-Vorrichtung (1) nach Anspruch 4 oder 5, **dadurch gekennzeichnet, dass** eine kaskadierte Ansteuerung der geschlossenen Regelkreise (30) und der übergeordneten zentralen Steuereinheit (40) ausgebildet ist, bei der die geschlossenen Regelkreise (30) die inneren Regelungen darstellen, die direkt auf geänderte Werte der Ansauggeschwindigkeiten (v) reagieren, und nachfolgend eine Einstellung und/oder Regelung auf die Sollwerte (v_soll) der zentralen Steuereinheit (40) vorgesehen ist.

7. Saugförder-Vorrichtung (1) nach einem der Ansprüche 4 bis 6, **dadurch gekennzeichnet, dass** die geschlossenen Regelkreise (30) an die zentrale Steuereinheit (40) ein Signal mit der jeweils eingestellten Ansauggeschwindigkeit (v) ausgeben und
die zentrale Steuereinheit (40) die einzelnen Sollwerte (v_soll) anpasst, zur Einstellung eines Mischungsverhältnisses und/oder einer Rezeptur (41), insbesondere als übergeordnete Regelung.

8. Saugförder-Vorrichtung (1) nach einem der vorherigen Ansprüche, **dadurch gekennzeichnet, dass** an das zentrale Ansaugvolumen (9) eine Bypass-Leitung (10) angeschlossen ist, durch die Fremdluft über einen Ausgangsanschluss (14) zu dem zentralen Ansaugvolumen (9) zuführbar ist, insbesondere einstellbar zuführbar ist, zur Regulierung eines Unterdrucks (p9) in dem zentralen Ansaugvolumen (9).

9. Saugförder-Vorrichtung (1) nach einem der vorherigen Ansprüche, **dadurch gekennzeichnet, dass** die Vakuumpumpe (7) durch einen Motor (6) angetrieben ist, der in Abhängigkeit eines im zentralen Ansaugvolumen (9) ermittelten, z.B. mittels eines Drucksensors (15) gemessenen, Unterdrucks (p9) regelbar ist, zur Regelung des im Ansaugvolumen (9) ausgebildeten Unterdrucks (p9).

10. Saugförder-Vorrichtung (1) nach einem der vorherigen Ansprüche, **dadurch gekennzeichnet, dass** das Drosselventil (18) ausgebildet ist, einen Durchtrittsquerschnitt der Ansaugleitung (3; 3-1, 3-2, 3-3, 3-4) aktiv zu verstellen.

11. Saugförder-Vorrichtung (1) nach einem der vorherigen Ansprüche, **dadurch gekennzeichnet, dass** die hinteren Leitungen als Schlauchleitungen (22) zwischen dem Förderabscheider (20) und einem hinteren Ende (23) ausgebildet sind, zum Einführen oder Anschließen des hinteren Endee (23) an den jeweiligen Vorratsbehälter (4; 4-1, 4-2, 4-3, 4-4).

12. Verfahren zum Saugfördern von Schüttgut (5; 5-1, 5-2, 5-3, 5-4) von mindestens zwei Vorratsbehältern (4; 4-1, 4-2, 4-3, 4-4), mit folgenden Schritten:
Erzeugen eines Unterdrucks (p9) oder Vakuums durch eine in einer Pumpeneinheit (2) vorgesehenen Vakuumpumpe (7) und Zuführen des Unterdrucks (p9) oder Vakuums zu einem zentralen Ansaugvolumen (9), an das mindestens zwei Ansaugleitungen (3; 3-1, 3-2, 3-3, 3-4) angeschlossen sind,
wobei jede Ansaugleitung (3) von dem zentralen Ansaugvolumen (9) über einen geschlossenen Regelkreis (30) zur Regelung einer Ansauggeschwindigkeit (v) zu einem Vorratsbehälter (4) mit Schüttgut (5) führt, wobei in der Ansaugleitung (3) jeweils ein geschlossener Regelkreis (30) mit einem in der Ansaugleitung (3) vorgesehen einstellbaren Drosselventil (18) und einem Durchfluss-Sensor (19) zur Messung einer Ansauggeschwindigkeit (v) in der Ansaugleitung (3) vorgesehen ist, wobei der Regelkreis (30) eingerichtet und ausgebildet ist, das Drosselventil (18) in Abhängigkeit der gemessenen Ansauggeschwindigkeit (v) einzustellen, Führen des Unterdrucks (p9) oder Vakuums von dem zentralen Ansaugvolumen (9) durch die mindestens zwei Ansaugleitungen (3) zu dem jeweiligen Vorratsbehälter (4), wobei die Ansaugleitungen (3) jeweils eine zu den jeweiligen Vorratsbehältern (4) führende hintere Leitung (22) und einen an die hintere Leitung (22) angeschlossenen Förderabscheider (20) zum Abscheiden des Schüttguts (5) aufweisen, Ansaugen von Luft mit aufgenommenem Schüttgut (5) aus dem jeweiligen Vorratsbehälter (4) und Fördern des Luft-Schüttgut-Stroms zu dem jeweiligen Förderabscheider (20),
Abscheiden des Schüttguts (5) aus dem Luft-Schüttgut-Strom in dem Förderabscheider (20) und Ausgabe des geförderten Schüttgutes (5),
wobei in jedem geschlossenen Regelkreis (30) eine Ansauggeschwindigkeit (v) der Ansaugleitung (3) gemessen und durch Änderung eines Leitungsquerschnitts der Ansaugleitung (3) zwischen dem Förderabscheider (20) und dem zentralen Ansaugvolumen (9) auf einen Sollwert (v_soll) geregelt wird,
wobei die Regelkreise (30) derartig ausgebildet sind, die Ansauggeschwindigkeit (v) jeweils auf einen einstellbaren Sollwert (v_soll) zu regeln, **dadurch gekennzeichnet, dass** in jeder Ansaugleitung (3) jeweils ein Sperrventil (16) zum Sperren der Ansaugleitung (3) vorgesehen ist und der Förderabscheider (20) jeweils zum einen über das Sperrventil (16) an die Pumpeneinheit (20) und zum anderen an die hintere Leitung (22) angeschlossen ist, und
der Durchfluss-Sensor (19) als THz-Sensor oder Ultraschall-Sensor ausgebildet ist zur Messung der Ansauggeschwindigkeit (v) in der Ansaugleitung (3), und
der Durchfluss-Sensor (19) ausgebildet ist zur Messung der Ansauggeschwindigkeit (v) als Doppler-Messung und/oder Laufzeitmessung und/oder Laufzeitdifferenzverfahren.

13. Verfahren nach Anspruch 12, **dadurch gekennzeichnet, dass** die geschlossenen Regelkreise (30) zunächst eine innere Regelung der Ansauggeschwindigkeit (v) zwischen einem unteren Grenzwert (v-min) und einem oberen Grenzwert (v-max) durchführen und
durch die Vorgabe der Sollwerte (v_soll) an die geschlossenen Regelkreisen (30) eine Ansteuerung oder Regelung des Verhältnisses der mindestens zwei Ansauggeschwindigkeiten (v) überlagert ist.

14. Verfahren nach Anspruch 13, **dadurch gekennzeichnet, dass**
einer zentralen Steuereinheit (40) eine Rezeptur (41) als Verhältnis der Ansauggeschwindigkeiten (v) oder als Mischverhältnis eingegeben wird und die zentrale Steuereinheit (40) in Abhängigkeit der Rezeptur (41) den geschlossenen Regelkreisen (30) die Sollwerte (v_soll) als äußere Ansteuerung oder Regelung vorgibt.

15. Verfahren nach einem der Ansprüche 12 bis 14, **dadurch gekennzeichnet, dass** in der Pumpeneinheit (2) der Unterdruck (p9) des zentralen Ansaugvolumens (9) eingestellt wird über eine Bypass-Leitung (10), durch die Frischluft dem zentralen Ansaugvolumen (9) in regulierbarer und / oder gedrosselter Weise zugeführt wird.

16. Verfahren nach einem der Ansprüche 12 bis 15, **dadurch gekennzeichnet, dass** ein in dem zentralen Ansaugvolumen ausgebildeter Druck (p) gemessen und durch Einstellung einer Pumpleistung einer Vakuumpumpe (7) geregelt wird.

17. Verfahren zum Verarbeiten von Schüttgütern, bei dem
mit einem Verfahren nach einem der Ansprüche 12 bis 16 mindestens zwei Schüttgüter (5, 5-1, 5-2, 5-3, 5-4) von verschiedenen Vorratsbehältern (4; 4-1, 4-2, 4-3, 4-3) in festen oder sich ändernden Mengenverhältnissen zu einer Verarbeitungsmaschine zugeführt werden,
und die Verarbeitungsmaschine aus den zugeführten Schüttgütern Schüttgüter (5, 5-1, 5-2, 5-3, 5-4) ein Verarbeitungsprodukt herstellt.

## Claims

1. Pneumatic suction conveying apparatus (1) for conveying granular bulk materials (5; 5-1, 5-2, 5-3, 5-4), the suction conveying apparatus (1) comprising:
a pump unit (2) including a vacuum pump (7) and a suction volume (9),
at least two suction lines (3; 3-1, 3-2, 3-3, 3-4), which are connected to the suction volume (9) and extend to storage containers (4; 4-1, 4-2, 4-3, 4-4) for receiving bulk materials,
said suction lines (3) each comprising a rear line (22) leading to the storage containers (4) and a conveying hopper (20) connected to said rear line (22) for separating the bulk material (5), where
in the suction line (3) each a closed control loop (30) having an adjustable throttle valve (18) provided in the suction line (3) and a flow sensor (19) for measuring a suction speed (v) in the suction line (3) is provided,
said control loops (30) being designed to adjust the suction speed (v) always to an adjustable target value (v_soll),
**characterized in that**
in each suction line (3) each a stop valve (16) for blocking the suction line (3) is provided and the conveying hopper (20) is each connected via the stop valve (16) to the pump unit (20) and also to the rear line (22), and the flow sensor (19) is designed as a THz sensor or ultrasound sensor to measure the suction speed (v) in the suction line (3), and
the flow sensor (19) is designed to measure the suction speed (v) as a Doppler measurement and/or time-of-flight measurement and/or time-of-flight difference method.

2. Suction conveying apparatus (1) according to claim 1, **characterized in that** the control loop (30) in the suction line (3) is provided each between the conveying hopper (20) and the stop valve (16).

3. Suction conveying apparatus (1) according to one of the above claims, **characterized in that** the target values (v_soll) of said at least two suction lines (3-1, 3-2, 3-3, 3-4) are adjustable independent of each other.

4. Suction conveying apparatus (1) according to claim 3, **characterized in that** a central controller device (40) is provided, controlling said control loops (30) of said plurality of suction lines (3-1, 3-2, 3-3, 3-4) using individual target values (v_soll) for adjusting relative ratios of said at least two suction speeds (v) in relation to one another depending on a formula (41),
said central controller device (40) comprising an interface for receiving said formula (41).

5. Suction conveying apparatus (1) according to claim 4, **characterized in that** in said central controller device (40) and / or in the decentral control loops (30) there is stored
- an upper threshold value (v-max) for the respective suction speed (v), for avoiding damage to and / or heating of the bulk material (4) and
- a lower threshold value (v-min) for the respective suction speed (v), to guarantee there is suctional intake through the rear lines (22),
said control loops (30) being provided and adapted to adjust the suction speed (v) measured by the flow sensor (19) within the threshold values (v-min, v-max), in particular, by way of internal regulation.

6. Suction conveying apparatus (1) according to claim 4 or 5, **characterized in that** a cascaded controlling of the connected control loops (30) and the overlaid central controller unit (40) is formed, wherein the closed control loops (30) represent the inner regulations, reacting directly to changed values of the suction speeds (v), and subsequently an adjustment and/or regulation to the target values (v_soll) of the central controller unit (40) is provided.

7. Suction conveying apparatus (1) according to one of the claims 4 through 6, **characterized in that** the closed control loops (30) put out a signal representing the respectively set suction speed (v) to said central controller unit (40) and
the central controller unit (40) adapts the individual target values (v_soll), to adjust a mixing ratio and/or a formula (41), in particular by way of overlaid regulation.

8. Suction conveying apparatus (1) according to one of the above claims, **characterized in that** a bypass line (10) is connected to the central suction volume (9), through which ambient air can be fed via an output connection (14) to said central suction volume (9), in particular in an adjustable manner, for regulating a negative pressure (p9) in said central suction volume (9).

9. Suction conveying apparatus (1) according to one of the above claims, **characterized in that** the vacuum pump (7) is driven by a motor (6) which can be regulated depending on a negative pressure (p9) determined in said central suction volume (9), e.g. measured by means of a pressure sensor (15), for regulating the negative pressure (p9) in the suction volume (9).

10. Suction conveying apparatus (1) according to one of the above claims, **characterized in that** the throttle valve (18) is adapted to actively adjust a passing cross-section of the suction line (3; 3-1, 3-2, 3-3, 3-4).

11. Suction conveying apparatus (1) according to one of the above claims, **characterized in that** the rear lines are designed as hose lines (22) between the conveying hopper (20) and a rear end (23), for introducing or connecting said rear end (23) to the respective storage container (4; 4-1, 4-2, 4-3, 4-4).

12. Method for suction conveying of bulk material (5; 5-1, 5-2, 5-3, 5-4) from at least two storage containers (4; 4-1, 4-2, 4-3, 4-4), comprising the following steps:
generating a negative pressure (p9) or vacuum by means of a vacuum pump (7) provided in a pump unit (2) and applying the negative pressure (p9) or vacuum to a central suction volume (9), connected to which are at least two suction lines (3; 3-1, 3-2, 3-3, 3-4),
each suction line (3) leading from the central suction volume (9) via a closed control loop (30) for regulating a suction speed (v) to a storage container (4) holding bulk material (5), where in the suction line (3) each a closed control loop (30) including a throttle valve (18) provided in the suction line (3) and a flow sensor (19) for measuring a suction speed (v) in the suction line (3) is provided, the closed control loop (30) being adapted and designed to adjust the throttle valve (18) depending on the suction speed (v) measured,
guiding the negative pressure (p9) or vacuum from the central suction volume (9) through said at least two suction lines (3) to the respective storage container (4), where the suction lines (3) each comprise a rear line (22) leading to the respective storage containers (4) and a conveying hopper (20) connected to the rear line (22) for separating the bulk material (5),
aspirating air with taken-up bulk material (5) from the respective storage container (4) and conveying the air and bulk material stream to the respective conveying hopper (20),
separating the bulk material (5) from the air and bulk material stream into the conveying hopper (20) and discharging the transported bulk material (5),
where in each closed control loop (30) a suction speed (v) of the suction line (3) is measured and adjusted to a target value (v_soll) by changing a line cross-section of the suction line (3) between the conveying hopper (20) and the central suction volume (9),
where the control loops (30) are designed so as to adjust the suction speed (v) always to an adjustable target value (v_soll),
**characterized in that** in each suction line (3) always a stop valve (16) for closing the suction line (3) is provided, and the conveying hopper (20) is always connected, for one thing, via the stop valve (16) to the pump unit (20) and, for another, to the rear line (22), and
the flow sensor (19) is designed to measure the suction speed (v) as a Doppler measurement and/or time-of-flight measurement and/or time-of-flight difference method.

13. Method according to claim 12, **characterized in that** the closed control loops (30) initially carry out an internal regulation of the suction speed (v) between a lower threshold value (v-min) and an upper threshold value (v-max) and,
by specifying the target values (v_soll) to the closed control loops (30), a controlling or regulation of the ratio of the at least two suction speeds (v) is overlaid.

14. Method according to claim 13, **characterized in that**
a formula (41) is entered into a central controller unit (40) as a ratio of the suction speeds (v) or as a mixing ratio and the central controller unit (40) specifies the target values (v_soll) as external control or regulation to the closed control loops (30) depending on the formula (41).

15. Method according to one of the claims 12 through 14, **characterized in that** the negative pressure (p9) of the central suction volumes (9) is adjusted in the pump unit (2) via a bypass line (10), through which fresh air is fed to the central suction volume (9) in an adjustable and / or throttled manner.

16. Method according to one of the claims 12 through 15, **characterized in that** a pressure (p) created in the central suction volume is measured and regulated by adjusting a pumping output of a vacuum pump (7).

17. Method for processing bulk materials, wherein,
using a method according to one of the claims 12 through 16, at least two bulk materials (5, 5-1, 5-2, 5-3, 5-4) are fed to a processing machine from different storage containers (4; 4-1, 4-2, 4-3, 4-3) in fixed or changing volume ratios,
and the processing machine manufactures a processed product from the fed-in bulk materials bulk materials (5, 5-1, 5-2, 5-3, 5-4).

## Revendications

1. Dispositif pneumatique de transport par aspiration (1) pour transporter des produits en vrac pouvant s'écouler (5 ; 5-1, 5-2, 5-3, 5-4),
le dispositif de transport par aspiration (1) comportant :
une unité de pompe (2) avec une pompe à vide (7) et un volume d'aspiration (9),
au moins deux conduites d'aspiration (3 ; 3-1, 3-2, 3-3, 3-4) qui sont raccordées au volume d'aspiration (9) et s'étendent jusqu'aux réservoirs de stockage (4 ; 4-1, 4-2, 4-3, 4-4) pour prélever du produit en vrac,
où les conduites d'aspiration (3) présentent respectivement une conduite arrière (22) conduisant à un réservoir de stockage respectif (4) et un séparateur (20) raccordé à la conduite arrière (22) pour séparer le matériau en vrac (5),
où
dans la conduite d'aspiration (3) est prévu respectivement un circuit fermé de régulation (30) avec une soupape d'étranglement (18) réglable prévue dans la conduite d'aspiration (3) et un débitmètre (19) pour mesurer une vitesse d'aspiration (v) dans la conduite d'aspiration (3),
le circuit de régulation (30) étant conçu pour régler la soupape d'étranglement (18) en fonction de la vitesse d'aspiration (v) mesurée,
les circuits de régulation (30) étant conçus pour régulier la vitesse d'aspiration (v) respectivement à une valeur de consigne (v_soll) réglable, **caractérisé en ce que**
dans chaque conduite d'aspiration (3) est prévue respectivement une soupape d'arrêt (16) pour fermer la conduite d'aspiration (3) et le séparateur (20) est raccordé respectivement d'une part à l'unité de pompe (2) via la soupape d'arrêt (16) et d'autre part à la conduite arrière (22), et le débitmètre (19) est conçu comme un capteur THz ou un capteur à ultrasons pour mesurer la vitesse d'aspiration (v) dans la conduite d'aspiration (3), et
le débitmètre (19) est conçu pour mesurer la vitesse d'aspiration (v) comme une mesure Doppler et/ou une mesure de temps de parcours et/ou un procédé par différence de temps de parcours.

2. Dispositif de transport par aspiration (1) selon la revendication 1, **caractérisé en ce que** le circuit de régulation (30) dans la conduite d'aspiration (3 ; 3-1, 3-2, 3-3, 3-4) est prévue respectivement entre le séparateur (20) et la soupape d'arrêt (16).

3. Dispositif de mesure (1) selon l'une des revendications précédentes, **caractérisé en ce que** les valeurs de consigne (v_soll) de l'au moins une conduite d'aspiration (3 ; 3-1, 3-2, 3-3, 3-4) sont réglables indépendamment les unes des autres.

4. Dispositif de transport par aspiration (1) selon la revendication 3, **caractérisé en ce qu'**il est prévu un dispositif de commande central (40) qui commande les circuits de régulation (30) des plusieurs conduites d'aspiration (3-1, 3-2, 3-3, 3-4) par des valeurs de consigne individuelles (v_soll) pour régler des rapports relatifs des au moins deux vitesses d'aspiration (v) les uns par rapport aux autres en fonction d'une formulation (41),
où le dispositif de commande central (40) présente une interface pour enregistrer la formulation (41).

5. Dispositif de transport par aspiration (1) selon la revendication 4, **caractérisé en ce que** dans le dispositif de commande central (40) et/ou dans les circuits de régulation (30) décentralisés sont enregistrés
- une valeur limite supérieure (v-max) de la vitesse d'aspiration respective (v) pour réduire les dommages et/ou les échauffements du produit en vrac (4) et
- une valeur limite inférieure (v-min) de la vitesse d'aspiration respective (v) pour garantir d'un processus d'aspiration à travers les conduites arrières (22),
les circuits de régulation (30) étant prévus et conçus pour réguler la vitesse d'aspiration (v) mesurée à travers le débitmètre (19) dans les vitesses limites (v-min, v-max), en particulier comme régulation interne.

6. Dispositif de transport par aspiration (1) selon la revendication 4 ou 5, **caractérisé en ce que** sont conçus une commande en cascade des circuits fermés de régulation (30) et l'unité de commande centrale (40) au-dessus, où les circuits fermés de régulation (30) représentent les régulations internes qui réagissent directement aux modifications de valeurs des vitesses d'aspiration (v), puis est prévu un réglage et/ou une régulation aux valeurs de consigne (v_soll) de l'unité de commande centrale (40).

7. Dispositif de transport par aspiration (1) selon l'une des revendications 4 à 6, **caractérisé en ce que** les circuits fermés de régulation (30) émettent à l'unité de commande centrale (40) un signal avec la vitesse d'aspiration (v) réglée respective et
l'unité de commande centrale (40) adapte chaque valeur de consigne (v_soll) pour régler un rapport de mélange et/ou une formulation (41), en particulier en tant que régulation supérieure.

8. Dispositif de transport par aspiration (1) selon l'une des revendications précédentes, **caractérisé en ce qu'**au volume d'aspiration central (9) est raccordée une conduite de dérivation (10) à travers laquelle on peut acheminer de l'air extérieur via un raccordement de sortie (14) au volume d'aspiration central (9), en particulier acheminé de façon réglable, pour réguler une sous-pression (p9) dans le volume d'aspiration central (9).

9. Dispositif de transport par aspiration (1) selon l'une des revendications précédentes,
**caractérisé en ce que** la pompe à vide (7) est entraînée par un moteur (6) réglable en fonction d'une sous-pression (p9) déterminée dans le volume d'aspiration central (9), p. ex. mesurée par un manomètre (15), pour réguler la sous-pression (p9) formée dans le volume d'aspiration (9).

10. Dispositif de transport par aspiration (1) selon l'une des revendications précédentes,
**caractérisé en ce que** la soupape d'étranglement (18) est conçue pour régler activement une section transversale de passage de la conduite d'aspiration (3 ; 3-1, 3-2, 3-3, 3-4).

11. Dispositif de transport par aspiration (1) selon l'une des revendications précédentes,
**caractérisé en ce que** les conduites arrières sont conçues comme des tuyaux flexibles (22) entre le séparateur (20) et une extrémité arrière (23) pour introduire ou raccorder l'extrémité arrière (23) au réservoir de stockage respectif (4 ; 4-1, 4-2, 4-3, 4-4).

12. Procédé d'aspiration d'un produit en vrac (5 ; 5-1, 5-2, 5-3, 5-4) d'au moins deux réservoirs de stockage (4 ; 4-1, 4-2, 4-3, 4-4),
comprenant les étapes suivantes :
Production d'une sous-pression (p9) ou d'un vide par une pompe à vide (7) prévue dans une unité de pompe (2) et acheminement de la sous-pression (p9) ou du vide à un volume d'aspiration central (9) auquel sont raccordés au moins deux conduites d'aspiration (3 ; 3-1, 3-2, 3-3, 3-4),
où chaque conduite d'aspiration (3) conduit depuis le volume d'aspiration central (9) via un circuit fermé de régulation (30) à la régulation d'une vitesse d'aspiration (v) jusqu'à un réservoir de stockage (4) contenant un produit en vrac (5),
où dans la conduite d'aspiration (3) est prévu respectivement un circuit fermé de régulation (30) avec une soupape d'étranglement (18) réglable prévue dans la conduite d'aspiration (3) et un débitmètre (19) pour mesurer une vitesse d'aspiration (v) dans la conduite d'aspiration (3), le circuit de régulation (30) étant conçu pour réguler la soupape d'étranglement (18) en fonction de la vitesse d'aspiration (v) mesurée,
Acheminement de la sous-pression (p9) ou du vide depuis le volume d'aspiration central (9) à travers les au moins deux conduites d'aspiration (3) au réservoir de stockage respectif (4), les conduites d'aspiration (3) présentant respectivement une conduite arrière (22) conduisant aux réservoirs de stockage respectifs (4) et un séparateur (20) raccordé à la conduite arrière (22) pour séparer le matériau en vrac (5),
Aspiration d'air avec du matériau en vrac (5) prélevé du réservoir de stockage respectif (4) et acheminement du flux air/matériau en vrac au séparateur (20),
Séparation du matériau en vrac (5) du flux air/matériau en vrac dans le séparateur (20) et délivrance du matériau en vrac acheminé (5),
où dans chaque circuit fermé de régulation (30), une vitesse d'aspiration (v) de la conduite d'aspiration (3) est mesurée et régulée par modification d'une section de conduite de la conduite d'aspiration (3) entre le séparateur (20) et le volume d'aspiration central (9) à une valeur de consigne (v_soll),
les circuits de régulation (30) étant conçus pour régulier la vitesse d'aspiration (v) respectivement à une valeur de consigne (v_soll) réglable, **caractérisé en ce que**
dans chaque conduite d'aspiration (3) est prévue une soupape d'étranglement (16) pour fermer la conduite d'aspiration (3) et le séparateur (20) est raccordé respectivement d'une part à l'unité de pompe (2) via la soupape d'arrêt (16) et d'autre part à la conduite arrière (22), et le débitmètre (19) est conçu comme un capteur THz ou un capteur à ultrasons pour mesurer la vitesse d'aspiration (v) dans la conduite d'aspiration (3), et
le débitmètre (19) est conçu pour mesurer la vitesse d'aspiration (v) comme une mesure Doppler et/ou une mesure de temps de parcours et/ou un procédé par différence de temps de parcours.

13. Procédé selon la revendication 12, **caractérisé en ce que** les circuits fermés de régulation (30) effectuent d'abord une régulation interne de la vitesse d'aspiration (v) entre une valeur limite inférieure (v-min) et une valeur limite supérieure (v-max) et
par l'exigence des valeurs de consigne (v-soll) aux circuits fermés de régulation (30) est imposée une commande ou une régulation du rapport des au moins **deux** vitesses d'aspiration (v).

14. Procédé selon la revendication 13, **caractérisé en ce que** dans une unité de commande centrale (40) est entrée une formulation (41) sous la forme d'un rapport des vitesses d'aspiration (v) ou d'un rapport de mélange et l'unité de commande centrale (40) prescrit les valeurs de consigne (v_soll) en fonction de la formulation (41) aux circuits fermé de régulation (30) en tant que commande ou régulation externe.

15. Procédé selon l'une des revendications 12 à 14, **caractérisé en ce que** la sous-pression (p9) du volume d'aspiration central (9) est régulée dans l'unité de pompe (2) via une conduite de dérivation (10), à travers laquelle de l'air frais est acheminé au volume d'aspiration central (9) de façon réglable et/ou restreinte.

16. Procédé selon l'une des revendications 12 à 15, **caractérisé en ce qu'**une pression (p) formée dans le volume d'aspiration central est mesurée et régulée par réglage d'une puissance de pompage d'une pompe à vide (7).

17. Procédé de traitement de produits en vrac dans lequel, avec un procédé selon l'une des revendications 12 à 16, au moins deux produits en vrac (5, 5-1, 5-2, 5-3, 5-4) de différents réservoirs de stockage (4 ; 4-1, 4-2, 4-3, 4-4) sont acheminés à une machine de traitement en rapports fixes ou changeants,
et la machine de traitement produit un produit de traitement à partir des produits en vrac acheminés (5, 5-1, 5-2, 5-3, 5-4).
